# EUROPEAN PATENT APPLICATION

(11) **EP 1 699 011 A1**
(43) Date of publication of application: **06.09.2006**
(21) Application number: 06251090.4
(22) Date of filing: 01.03.2006
(51) Int. Cl.: G06Q 10/00

(54) **System and method for collateralization of a commodity title**

(30) Priority: 01.03.2005 US 69903
(71) Applicant: Board of Trade of the City of New York, Inc., New York, NY 10282 (US)
(72) Inventor: Yeung, Nancy, Centerport New York 11721 (US); Fisher, Paul J., Waldwick NJ 07463 (US)
(74) Representative: Exell, Jonathan Mark

(57) **Abstract**

The invention relates to a method for electronically furthering the commodity operations for a particular unit of a commodity on a distributed computer network such that a data record indicating the identity of the electronic title holder can be securely updated by actors in the commodity exchange, or automatically by the system. In addition, the present invention relates to a method for securely indicating the collateralized status of a commodity, while simultaneously facilitating the transfer of the commodity from a first party to a third party such that the collateralization of the commodity is not jeopardized.

## Description

### Field of Invention

This invention relates generally to a system and method for international commodity management and, more particularly to a database device driven system and method for coordinating the collateralization of the electronic title over a particular unit of an imported and/or exported commodity.

### Background of the Invention

Each time an entity either imports or exports a commodity, the entity generates a paper trail associated with the movement and proposed movement of commodity. The amount of documentation associated with a commodity in the international market can be staggering. A study conducted by the World Trade Organization concludes that the global cost of shipping documentation alone costs four hundred twenty billion dollars in 1996, or seven percent of the cost of international trade, for 1996. The voluminous documentation associated with an international commodity exchange market can be demonstrated using coffee as an example.

The United States imports about twenty million bags of coffee per year. If the average size coffee transaction involves five hundred bags, and the coffee exchanges hands only once before it is roasted, then there would be 40,000 coffee transactions per year. If the coffee is exchanged twice, there would be 80,000 transactions per year. Presently, coffee is exchanged an average of 1.5 times, extrapolating to 60,000 transactions per year in the United States alone based on these assumptions.

With worldwide coffee imports at close to eighty million bags, the international market is four times larger than the U.S. segment. If coffee were exchanged at the same rate internationally as in the U.S., then the worldwide volume for coffee transactions would be 240,000 transactions per year. Using the World Trade Organization method of calculation, the annual cost of paper documentation for the U.S. coffee exchange market would amount to approximately seventy million dollars, and the annual cost of paper documentation for the international coffee exchange would amount to approximately two hundred eighty million dollars.

Accordingly, there is a need for a database device driven commodity documentation system which minimizes the physical paper trail associated with the international import/export market for a particular commodity without compromising the integrity of the information associated with the particular commodity in that market. The establishment of an electronic ownership title and transfer of title electronically reduces the paper volume and transaction time. In addition, there is a need for a commodity documentation system which minimizes costs and time associated with the upkeep of such commodity records. Further, there is a need for a commodity documentation system which securely tracks the transfer of a commodity between all the actors involved in a series of transactions from source of the commodity to the end user of the commodity. The present invention can satisfy one or more of these and other needs.

### Brief Description of the Drawing Figures

Figure 1 is a flow diagram illustrating steps for commodity importation/exportation in accordance with an illustrated embodiment;
Figure 2 is a flow diagram illustrating steps for commodity arrival in accordance with the embodiment of Figure 1;
Figure 3 is a flow diagram illustrating steps for commodity transfer from pier to processor in accordance with the embodiment of Figure 1;

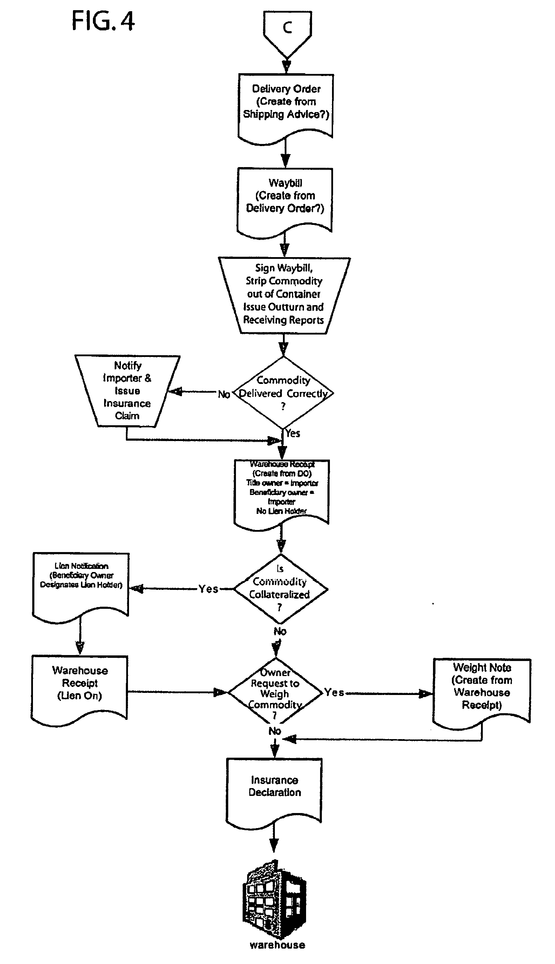

Figure 4 is a flow diagram illustrating steps for commodity transfer from pier to warehouse in accordance with the embodiment of Figure 1;

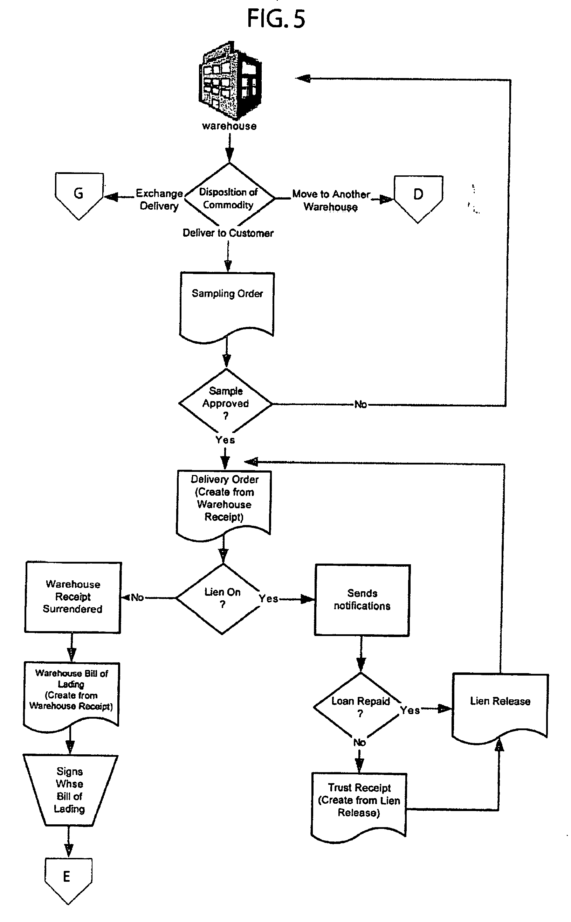

Figure 5 is a flow diagram illustrating steps (out of warehouse) for commodity transfer from warehouse to processor in accordance with the embodiment of Figure 1;

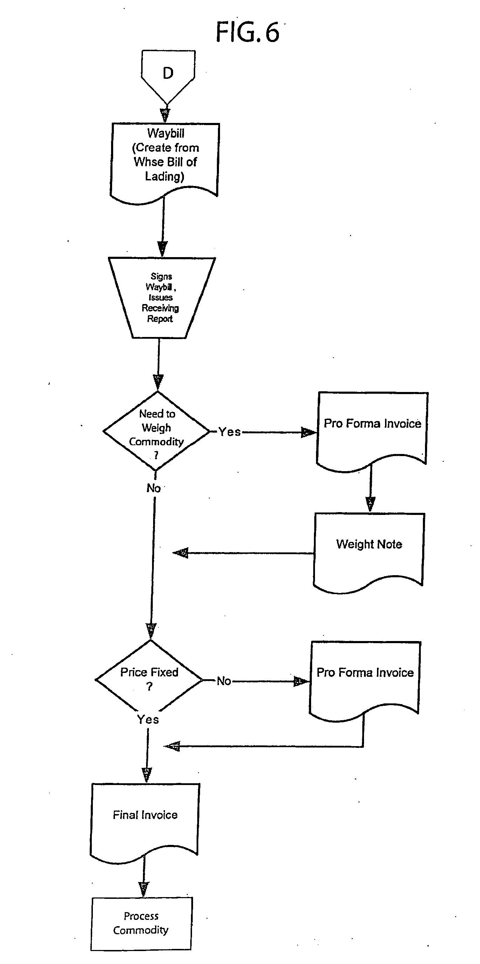

Figure 6 is a flow diagram illustrating steps (to processor's location) for commodity transfer from warehouse to processor in accordance with the embodiment of Figure 1;
Figure 7 is a flow diagram illustrating steps (out of warehouse) for commodity transfer from warehouse to warehouse in accordance with the embodiment of Figure 1;
Figure 8 is a flow diagram illustrating steps (in to a warehouse) for commodity transfer from warehouse to warehouse in accordance with the embodiment of Figure 1;
Figure 9 is a flow diagram illustrating steps for commodity exchange delivery (certification and issue notice) in accordance with the embodiment of Figure 1; and
Figure 10 is a flow diagram illustrating steps for commodity exchange delivery (title and money transfer) in accordance with the embodiment of Figure 1.
Figure 11 is a system overview in accordance with an illustrated embodiment thereof;
Figure 12 is a table which depicts users of the system constructed in accordance with the illustrated embodiment, the types of documents automatically updated thereby, as well as which users transact with which types of documents;
Figures 13a-13d is a flow diagram illustrating steps in accordance with the illustrated embodiment of Figure 11;
Figure 14A is an exemplary delivery order;
Figure 14B illustrates a browser interface useable with the illustrated embodiment;
Figure 15 is an exemplary GUI sampling order;
Figures 16-20 are exemplary GUI data entry forms for various data fields; and

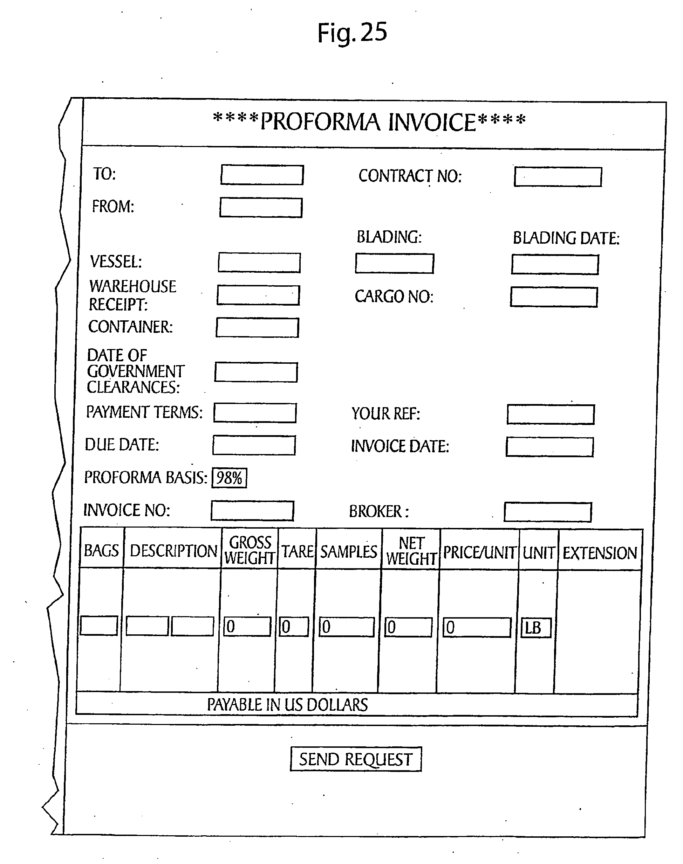

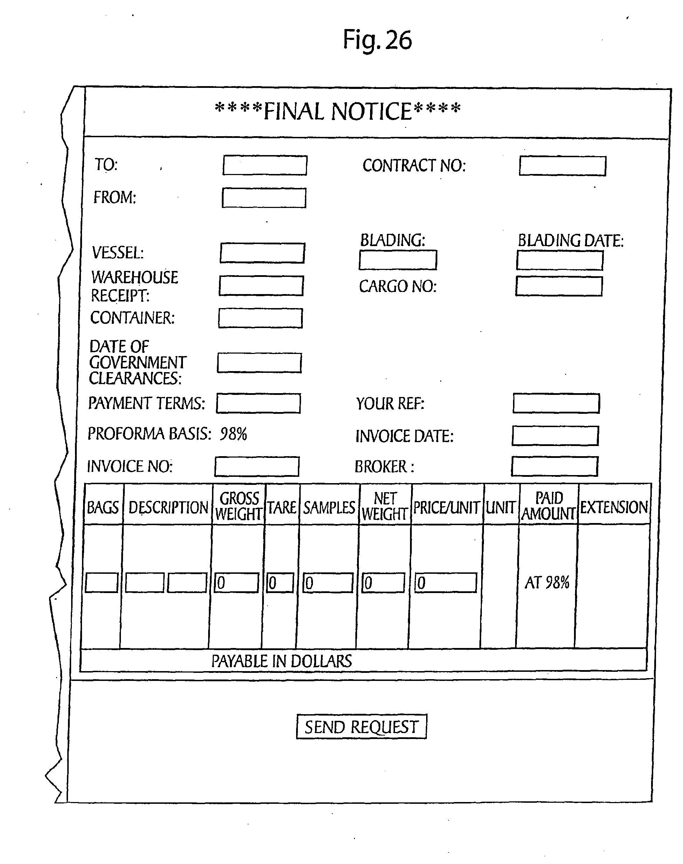

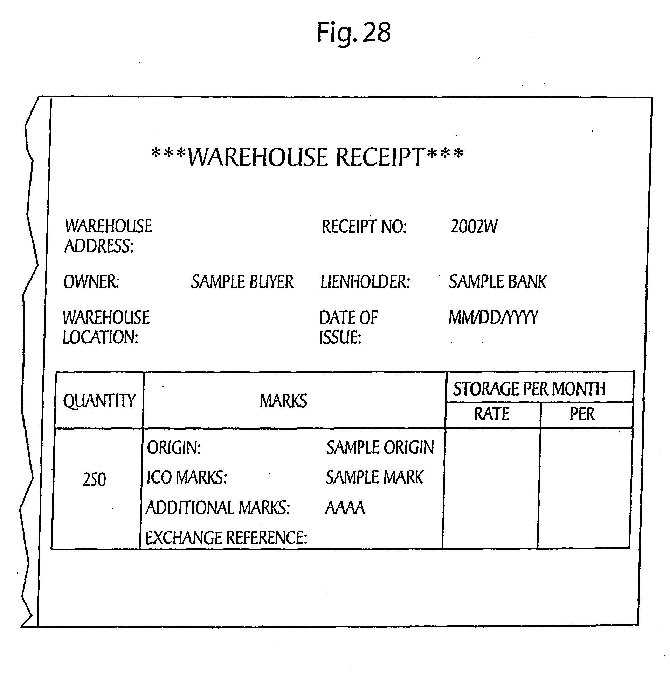

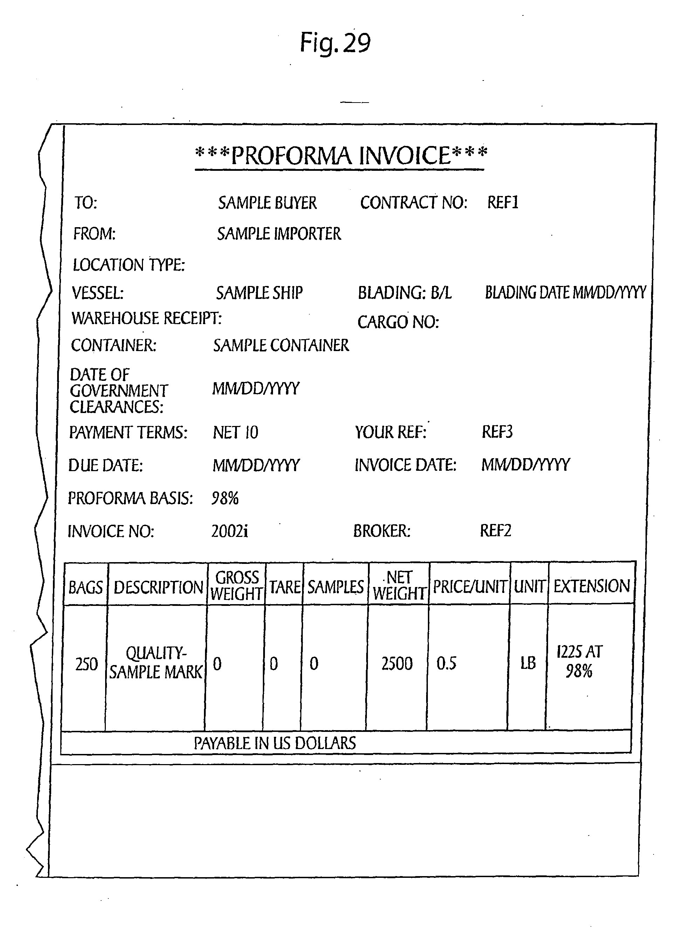

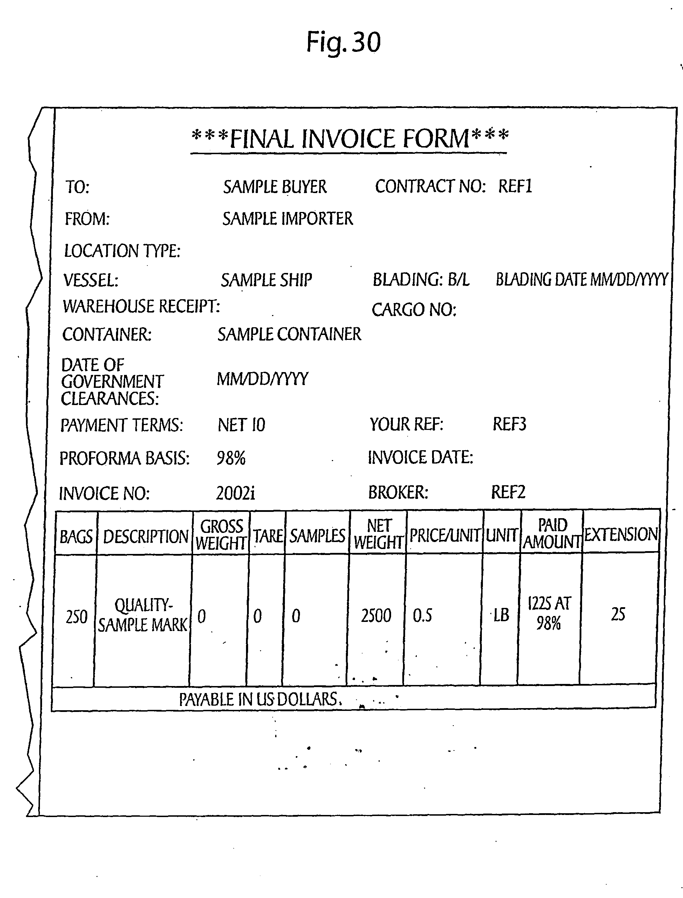

Figures 21-30 are further exemplary GUI data entry forms for various data fields.

### Description of Illustrative Embodiments

By way of overview and introduction, the present invention relates to a system and method for securely documenting the title and transfer of title, as well as the physical transfer of an imported and/or exported commodity over a distributed computer network. Data records are built for each particular unit of commodity in the international commodity exchange. Once the data records are built, or concurrently with the record build, the data records are partitioned into a number of data fields relating to the commodity. For example, data fields can include without limitation Bill of Ladings, Sampling Orders, and Delivery Orders. Each data field preferably pertains to a particular document in the transfer of the particular commodity though the data record can be configured to have data fields specific to data entries within particular documents, as understood by those of skill in the art. Actors are granted access to the data fields which pertain to each particular actor's contribution in the transfer of the commodity from source to end user. That being said, information pertinent to a particular data field may also be pertinent to information contained in another data field pertinent to another actor. If so, such information is automatically distributed amongst the data fields of various documents thereby minimizing duplicate and possibly contradictory data entries.

Upon arrival in the importing country, financial agreements are entered between the title holder and financial institutions with the ownership of the commodity used as security for the principal of the debt being financed. When the owner, as indicated on an electronic title, pledges their ownership interest to a financial institution, e.g., a bank, the financial institution desires to have their security interest in the commodity indicated on the title. Thus, the electronic title of the commodity is updated to indicate that the financial institution is the holder of the title. However, ownership of the commodity must be able to pass to an end user, e.g., a processor, roaster, or transporter, in order for the commodity to be put to its commercial purpose. The owner who entered into the financial agreement with the bank arranges a transfer of the commodity to the end user, but can not do so without title also passing to the end user. The claimed invention addresses the problems associated with assuring that the debt remains secured, while permitting the transfer of the commodity to the end user.

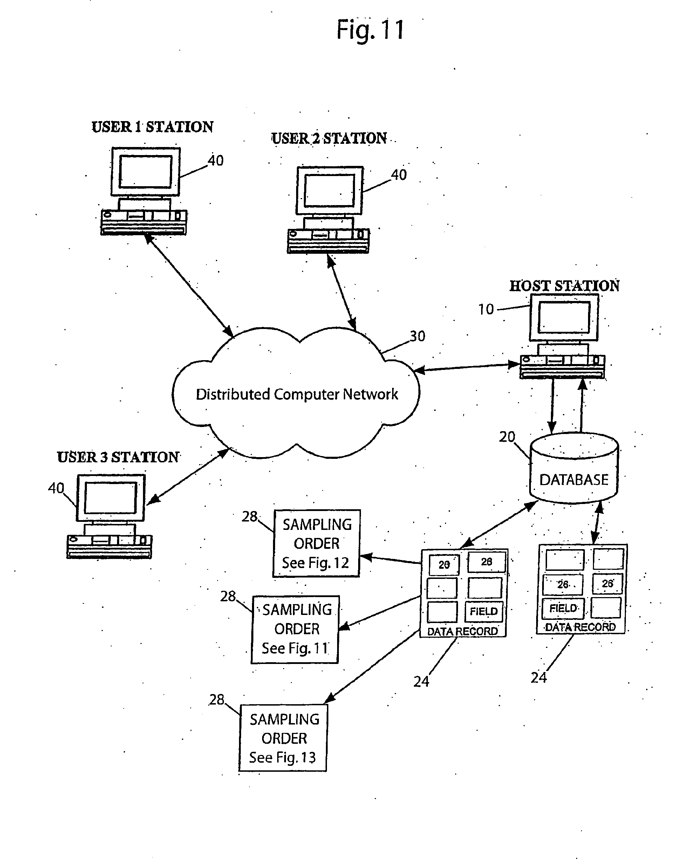

Figure 11 depicts an overview of the main hardware components associated with the commodity documentation system of the illustrated embodiment. A host computer 10 interfaces with database 20 and a distributed computer network system 30. The distributed computer network system 30 can be any type of inter-computer communication system that connects computers in a distributed manner such as the Internet, an intranet, LAN, or WAN. User terminals 40 are connected via the network 30 to the host computer 10. The user terminals 40 are thin clients on the distributed computer network 30 and, hence, rely on the host computer for most of the system functions. Host computer 10 communicates with the user terminals 40 to upload data from the terminals or to download data to the terminals. Database 20 stores data records 24 and which are parsed into plural data fields 26. Each unit of a particular commodity has a data record 24. As shown in Figure 11, the data record 24 has been parsed into six data fields 26. As further shown, the data fields represent various information about a particular commodity. Figure 11 schematically refers to various data entry forms 28 suitable for particular unit of a commodity. By way of example, the data entry forms for a Sampling Order, Delivery order and Weigh Note are depicted in Figure 11 and are all relevant to a coffee transaction, though the invention is not limited in application to any particular commodity. Database 20 also contains storage memory containing the data entry forms 28. Additionally, host computer 10 is controlled by a system control program 12 which operates to create the commodity document system of the present invention by storing, displaying, modifying, and securing the data pertaining to documents necessary in the series of transactions for commodities.

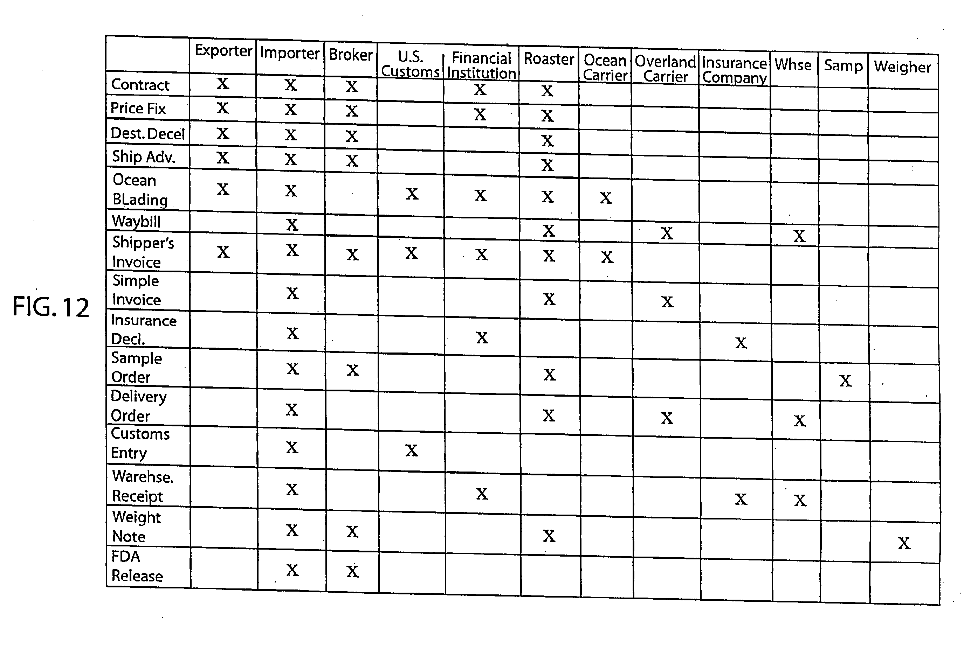

With reference to Figure 12, Table 1 depicts the various actors participating in a commodity transaction and the types of documents that are used. Table 1 presents in matrix form the actors and documentation involved in a series of transactions which typically occur to deliver a particular unit of a commodity such as coffee from a first actor to the final end user. The top row identifies the various actors, e.g., exporter, ocean carrier, warehouse ("whse"), etc.; the vertical column represents the documentation involved, e.g., destination declaration ("dest decl"), ocean bill of lading, customs entry, etc. At different stages in the series of transactions an actor may need only passive access, i.e., may only need to view the contents of the document. At other stages in the transaction the actor may need to have dynamic access to the document, i.e., an ability to view and alter the contents of the document.

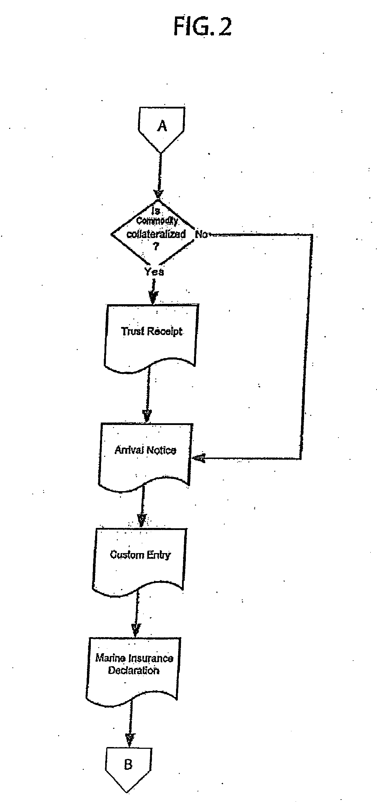

In a given series of transactions for a particular commodity, or a particular unit of a commodity, there can be additional or fewer actors or documentation; the matrix in Figure 2 is intended to depict a typical transaction as opposed to a simple or complex transaction with liens, multiple commodity movement, etc.

The following discussion will use coffee as a representative commodity. However, the invention is not so limited as to require coffee as the commodity. The present limitation invention also has application in the exchange of other commodities such as cocoa, cotton, wheat and sugar.

As an example, most coffee is shipped from its source by an Ocean Carrier. Upon arrival, the coffee is turned over to an Overland Carrier to deliver the goods to the end user, or a commodity processor, which in this example is a Coffee Roaster. Oftentimes, for instance with exchange deliveries, the commodity will go to a warehouse for storage. At a later date, an overland carrier would be contracted to move the commodity to the end user.

As illustrated in Figure 12, there are at least twelve actors who are involved with a typical coffee delivery. These twelve actors interact by using primarily fifteen major documents. Both the actors and the documents are listed in Figure 2. There are an average fifty-nine presentations of documents in the average coffee transaction depicted in this Figure.

The following is a description of the fifteen documents included in Figure 12:

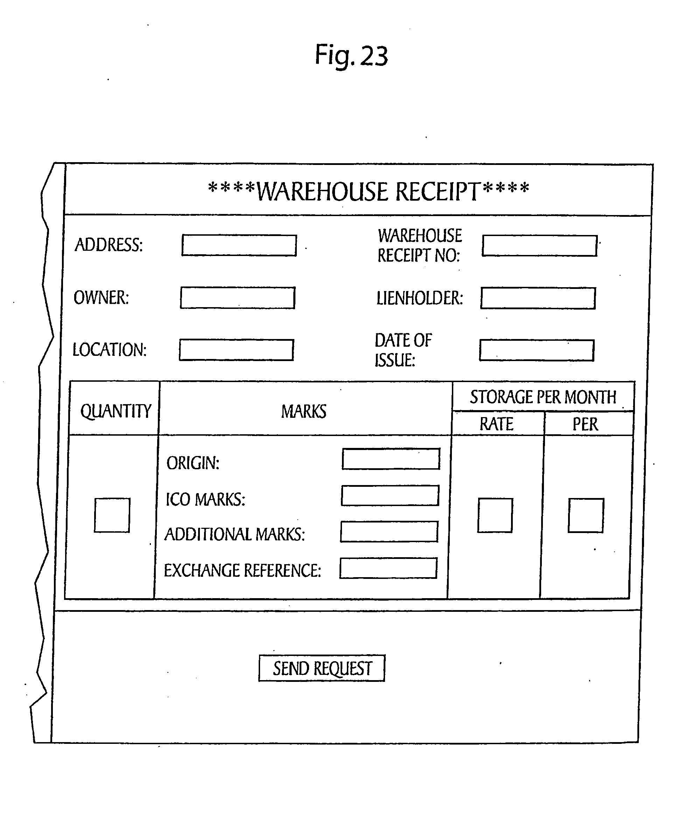

The Warehouse Receipt is the title document for a particular unit of a commodity. Under the U.S. Warehouse Act of 2000, a user of the hosted system can register with the USDA as a Provider under the Farm Service Agency Provider Agreement to Electronically File and Maintain Electronic Warehouse Receipts and Electronic Documents. Figure 23 demonstrates the GUI representation of the Warehouse Receipt prior to data entry. As shown in the example of Figure 23, a Warehouse Receipt comprises information about the particular unit of the commodity's rate as well as the owner and time holder.

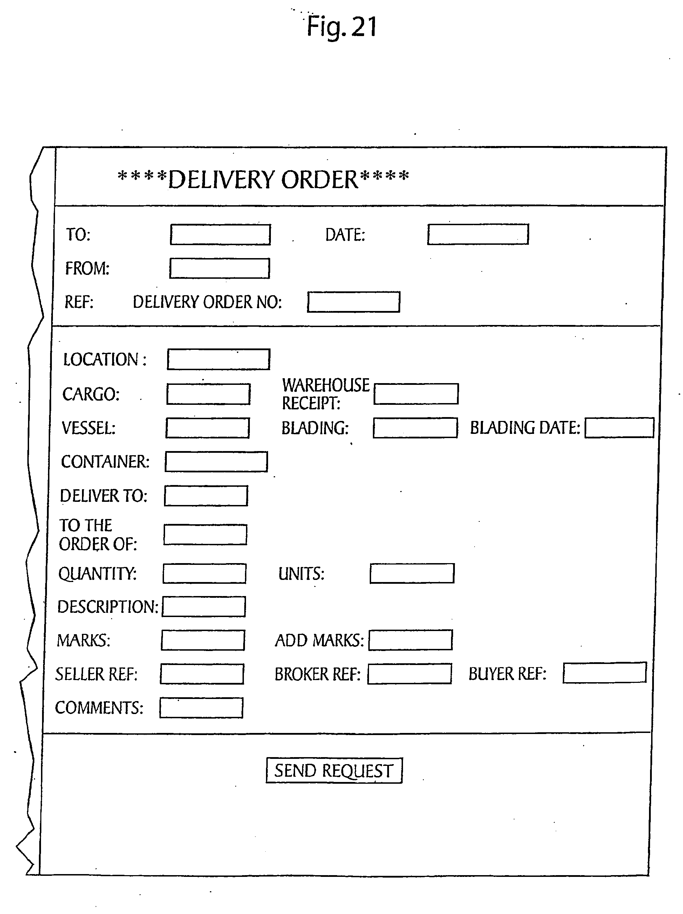

The Delivery Order is used to transfer title. Although it is optional when transferring ownership inside a warehouse, when the goods are being moved it is a primary title document giving authorization for a warehouse to turn goods over to a common carrier for delivery to a specified account. The GUI representation of an example of a Delivery Order is shown in Figure 21.

The Delivery Order may take other forms depending on the combination of Actors. For instance, financial institutions handle transference of the title differently. An electronic warehouse receipt is prohibited by U.S. government regulations to list lien holders, thus when an owner wishes to collateralize the commodity, a Notice of Assignment is generated which pledges the owner's title in the commodity to the financial institution. This Notice of Assignment, when generated in electronic form, acts to record the title to the financial institution. The financial institution then forwards the loan proceeds, now secured by the commodity. After a buyer is found, the commodity needs to be placed under the pledgor/owner's title so that a transfer of goods and payment can be made between buyer and seller. The pledgor/owner has an electronic Trust Receipt issued to guarantee payment of the loan back to the financial institution, and the bank responds by having an electronic Bank Release issued. The pledgor/owner now has fee title to transfer ownership of the commodity to the seller via the Delivery Order, described above.

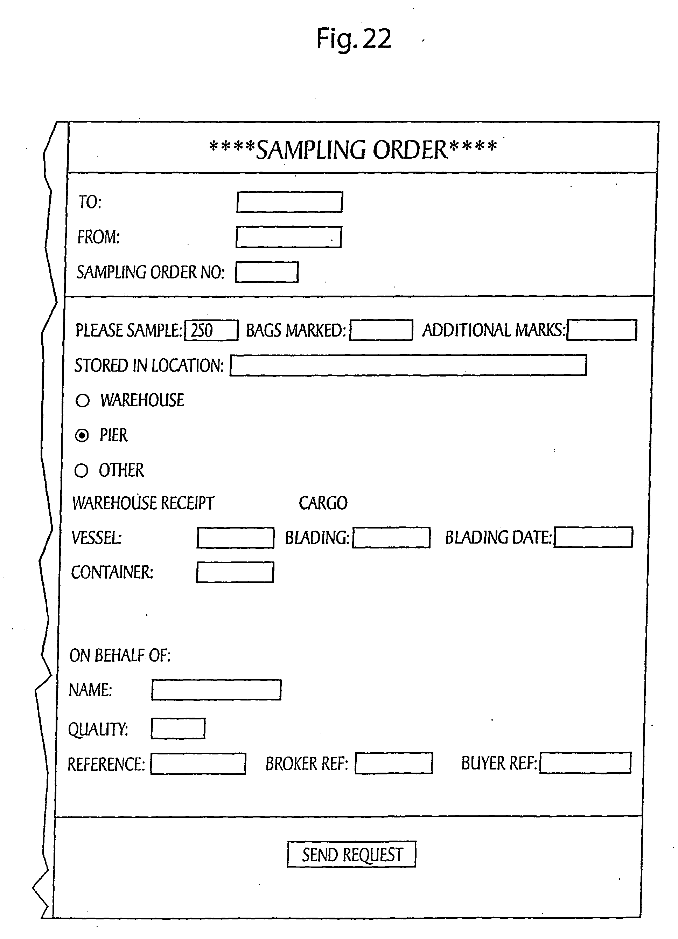

The Sampling Order starts the sampling process and also initiates the tendering process. The Sampling Order instructs the Sampler as to the quantity of coffee, its current location, and gives details on the coffee's origin. The GUI representation of an example of the Sampling Order is shown in Fig. 22.

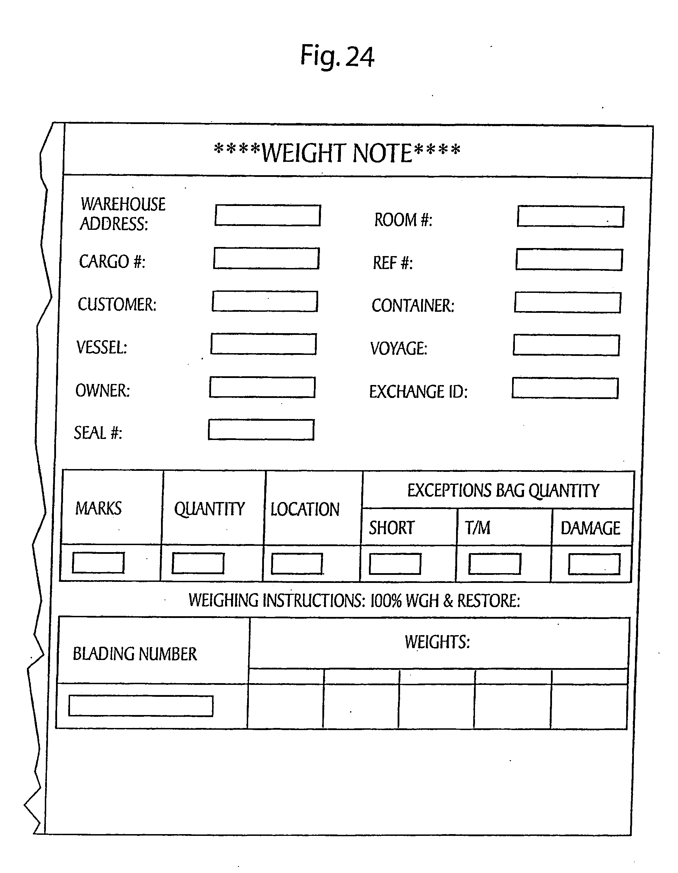

The Weight Notes supplies the Weigher with information with respect to the coffee and instructions on how much of the coffee should be weighed. See Figure 24 for an example GUI representation of the Weight Note.

There are two Bills of Lading in a simple coffee transaction. The Ocean Bill of Lading ("Ocean Blading") is a full title document. The second Bill of Lading is sometimes referred to as a waybill. It is the document issued by common carriers for overland transport.

The Ocean Blading generated by the present system is an electronically generated title document which transfers title, and is considered a form of a Delivery Order for that reason. By transferring title with an electronic Ocean Blading, the ownership interest is immediately verifiable at the destination port. Because the paper Ocean Bill of Ladings, as practiced by the prior art, are considered bearer instruments the electronic Ocean Blading provides a much more secure ownership interest. Upon generation of an Ocean Blading, title transfers to the designated receiver of the commodity, who is then able to leverage the value of the commodity with a financial institution as describe above. The system in accordance with an embodiment of the invention eliminates the need to courier paper bearer instruments across international boundaries and oceans. Additionally, a more fluid market is created where a commodity can be collateralized much sooner, thus generating a greater cash flow for the actors participating in the transactions.

The Customs Entry document records information on the pedigree of the commodity including its Importer, Exporter, Ocean Carrier, Overland Carrier, and all other entities which handled the commodity prior to reaching the Warehouse. The programmed system can have the capability of integrating this documentation with the Automated Broker Interface ("ABI") System provided by the US Customs Service. More specifically, in a preferred implementation, data can flow between an authorized terminal 40 coupled to the host computer 10 and the US Customs Service via the ABI. Additionally, an authorized terminal 40 may receive release documents electronically from the Food and Drug Administration Agency.

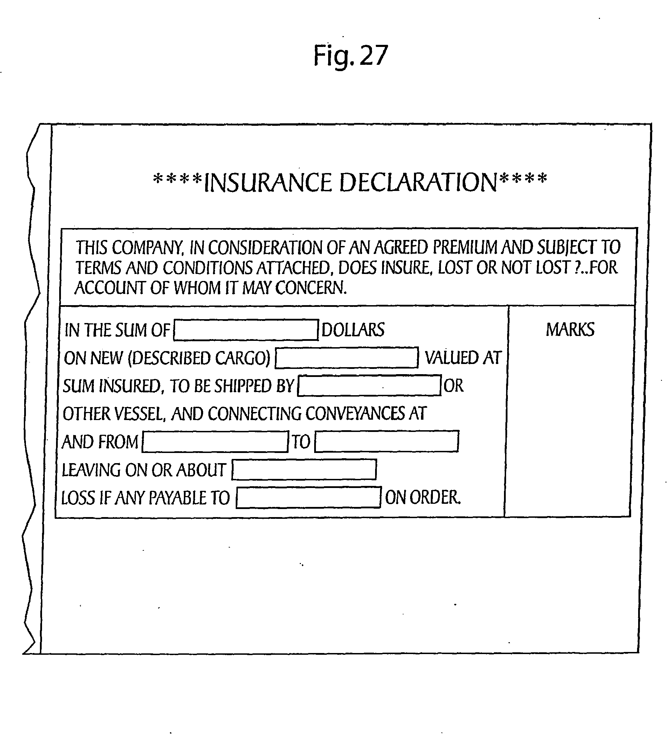

The Insurance Declaration is an informal document which currently exists in various formats depending on the standard adopted by an insurance company and their insured. The formal documentation remains the actual insurance policy, but premium charges are derived from statements made on the face of the insurance declaration. The present invention standardizes the format of the insurance declaration and provides a uniform presentation to determine what amount of commodity is covered by marine or warehouse insurance policies. Figure 27 is a GUI representation of an example of the Insurance Declaration.

Two different invoices document the value of a commodity depending on where in the series of transactions the value is being determined. First, the Shipper's Invoice is part of the original documentation package from the commodity's source country. Importers and financial institutions use this invoice to pay for goods while they are in transit on the ocean. The Shipper's Invoice also is used to calculate the Customs and port user fees that are charged by the government. The other invoice is a Simple Invoice, and it is used to set forth the cost of goods on sale after importation. There can be more than one Simple Invoice in the series of transactions, leading to possession of the commodity by the end user, each occurring upon the exchange of the commodity.

Contract, Price Fix Letter, Destination Declaration ("Dest. Decl"), and Shipping Advice ("Ship Adv.") are four other documents used by front office operations involved in the commodity operation. The host computer 20 of the commodity documentation system is able to download information about the commodity being managed that is used repetitively by the front offices of each actor in the series of transactions.

Also outlined in Figure 12 are twelve actors that are involved in a typical commodity transaction for coffee. The Exporters are at the beginning of the document flow for coffee. There are thousands of exporters in the fifty-two countries that generally are known to export coffee. An exporter is involved in contracts, (lawful) price fixing, destination declarations, shipping advices, ocean bill of ladings, and commercial (Simple) invoices. Utilizing the hosted system, exporters can store more inventory at the destination port and thereby increase their domestic (that is, U.S.) credit-worthiness for higher lines of credit at interest rates that are generally lower than are available in their source country. Such a benefit is a prime example of how the hosted system expands trading into secondary markets.

Importers require access to all the documentation listed in Figure 12. Access to these documents through the hosted electronic commodity documentation system 10 will lead to money saving reductions in back office costs. By easing the burden and cost associated with paper documentation, the hosted computer 10 can stimulate trading in a secondhand market. Thus, for example, other software systems in support of cash market transactions can by used to trade bags of coffee or another commodity with internet efficiency and speed, allowing for the exchange of a commodity three, or more times, between merchants, before finding a final buyer. The present system, however, is not configured to trade goods.

Financial Institutions actively finance the coffee business on a collateralized basis, as described above in connection with the alternative title transfer papers of Notice of Assignment, Trust Receipt and Bank Release. The system 10 improves upon the present commodity documentation management techniques and creates a more efficient and more secure documentation system. This greater efficiency and security can encourage the entrance of more banks and other financial institutions into the commodity marketplace who may find these increased security measures as sufficient for them to finance these commodities.

The title transfer papers, Notice of Assignment, Trust Receipt and Bank Release, eliminate the need to wait for bearer instruments which accompany the commodity to arrive at the import destination. Title to the commodity can be transmitted electronically, and financing can be obtained before the commodity even arrives. The Notice of Assignment is an agreement entered into by the title holder, e.g., an importer, as indicated on the electronic title. The title holder pledges the title to the financial institution as security for a loan. Once the title holder arranges the sale of the pledged commodity to a third party, perhaps an end-user roaster or transporter, a Trust Receipt is issued indicating that the pledged commodity can be physically transferred to the third party. A Bank Release is issued upon payment of the debt collateralized by the financial agreement. Through this process the ownership of the commodity is indicated on the electronic title is changed to indicate the financial institution and then back again. Thus, there is no need to list a lien holder on the electronic title. Actual ownership as indicated on the electronic title to the commodity is changed. After the Notice of Assignment, the financial institution is the holder of the goods, the pledgor issues a Trust Receipt so that the commodity can be physically passed to the third party. A Bank Release then is issued to remove the financial institution as the title holder.

Insurance Companies and insurance underwriting companies are involved in insuring all shipments and warehouse deliveries. The hosted system automates the insurance declaration process as well, by permitting sharing of data concerning the particular unit of commodity in question among terminals connected to the network.

Ocean Carriers issue the Ocean Blading, described above. The hosted system can provide a general standard for electronic Ocean Blading, not shown. Similarly, Overland Carriers issue waybills and these waybills are preferably standardized by the hosted system to provide a more efficient way to book overland freight.

Roasters are the end-users, or commodity processor, in the series of transactions involving coffee. Roasters have access to all the information that characterizes the identity, quality, and destination of the coffee and enable them to process coffee correctly in view of its characteristics.

Customs Brokers ("Brokers") are the connection between the commodity industry and the U.S. and other Customs Services. Terminal 40 can interface with the U.S. Customs Service's ABI system and provide government approvals to include in the data records for specific units of a commodity (e.g., a given shipment). Warehouses ("Whse"), Samplers ("Smp"), Weighers, and Future Commodity Merchants are also actors in the commodity market and need access to the documentation for a particular unit of the commodity.

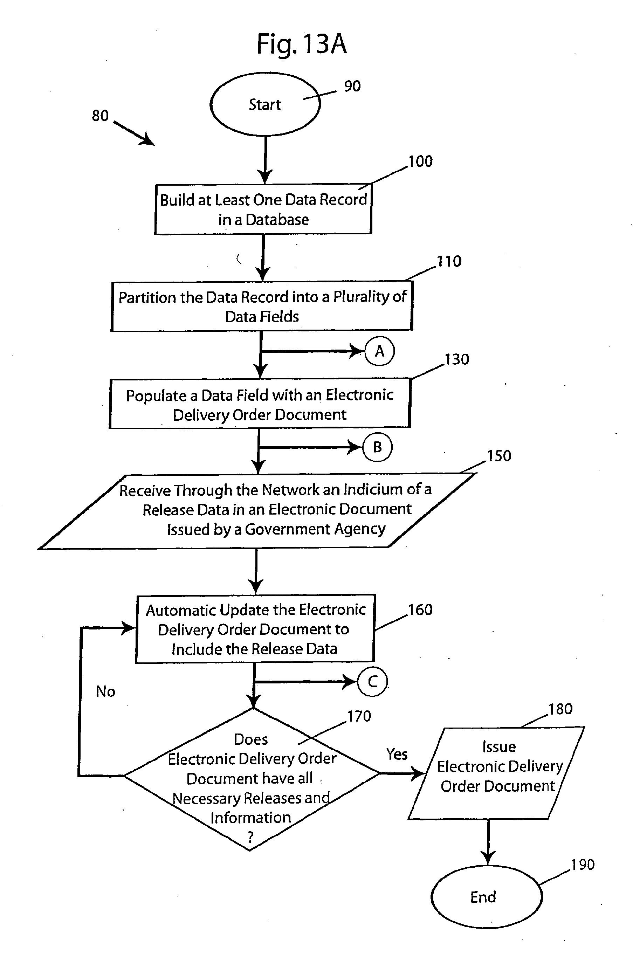

Figures 13a-13c illustrate processes which embody the methods in accordance with another embodiment. Process 80a broadly implements a method for controlling the movement of a commodity. Process 80b-80d enhance the steps of a process 80a with further, preferred steps in accordance with the invention.

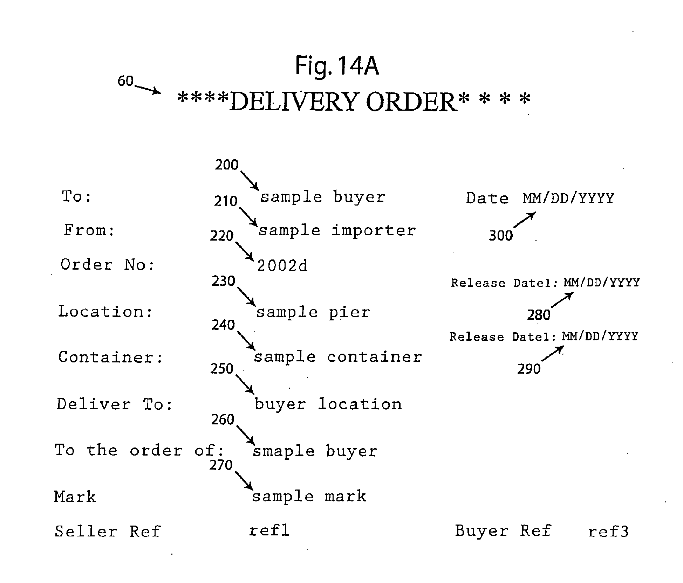

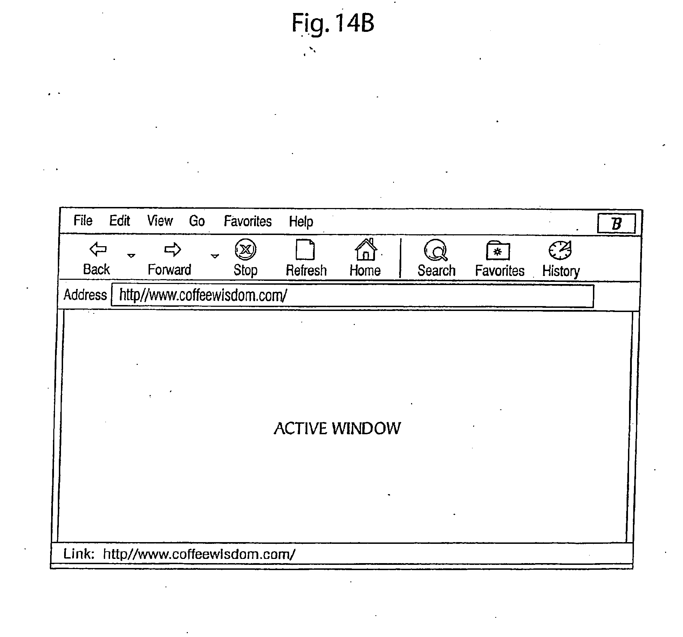

Figure 13a depicts a flowchart for a method which embodies one aspect of the present invention. At step 100 host station computer 10 builds at least one data record 24 which is then stored in the database 20. The data records in the database are then further partitioned by host computer 10 into a plurality of data fields 26 at step 110, or are partitioned upon creation. Within data record 24 can be stored the electronic documents for a series of transactions concerning the movement of a commodity from source to end user. The data fields 26, partitioned within the data record 24, can each represent an electronic document used in transactions between actors involved in the movement of the commodity or can represent fields within such a document. At step 130 the exemplary embodiment populates one data field 26 with an electronic Delivery Order document 60. An exemplary Delivery Order document is shown in Figure 14. Other forms of a Delivery Order can include a Notice of Assignment, a Trust Receipt, a Bank Release, and an Ocean Blading (all not shown).

Figure 14A depicts a graphical manifestation of the electronic Delivery Order document 60. A Delivery Order document as described herein transfers title between holders and can also refer to the final document needed in the series of transactions to allow for the movement of the commodity from its discharge point into the country of import; there can be other similar documents utilized after the goods have entered the destination country. The Delivery Order document indicates the buyer 200 and the importer 210. Additionally, pedigree information detailing the origin of the commodity is shown by displaying the pier 230, container 240, and identifying marks 270. Release date1 280 and release date2 290 are key parameters necessary for releasing the particular shipment of the commodity from its destination point. These dates are provided by the Customs and the Food and Drug Administration in the U.S. and by similar agencies overseas.

With continued reference to the method depicted in Figure 13a, at step 130 a data field 26 is populated with an electronic Delivery Order document. Further, at step 150, the distributed computer network 30 relays to host computer 10 an electronic document issued by a government agency containing an indicium of a release date. A government agency typical of being involved in the clearance of imported or exported commodities may be a Customs Service. Additionally, if the commodity is a food staple, such as coffee, sugar, or cocoa, an agency equivalent to the Food and Drug Administration may also be involved in providing approvals to proceed the movement of the commodity into a given country. For instance, within the United States the U.S. Customs Service implements an Automated Broker Interface system which connects authorized custom brokers to the U.S. Customs Service external network. The Customs Service issues customs entry documents which records pedigree information for the commodity which has previously been transmitted by the broker. Interaction between the customs broker, U.S. Customs Service, and the host system 10 detailed below.

The host computer station 10 automatically updates the electronic Delivery Order document to include the release date 280 at step 160. A particular shipment of a commodity, or a particular type of commodity, may require more than one governmental agency approval before being released from its destination point. Accordingly, at step 170 a method embodying one aspect of the present invention tests whether all the necessary releases and information has been populated into the electronic Delivery Order document. If all necessary releases have not been received the program loops back to step 160. If all necessary release dates and information has been populated into the Delivery Order, at step 180 the computer program operating within host computer station 10 automatically issues an electronic Delivery Order document. This is of particular advantage as it frees the current title holder to move the commodity into the country at the first possible moment.

For this embodiment, issuance of the electronic Delivery Order document demonstrates that the particular lot of commodity involved in this series of transactions has received all necessary clearances to physically move beyond the discharge point and towards the end user. The method of this embodiment terminates at step 190 after successful issuance of the electronic deliver order. However, the method preferably remains operative and available to control further movements of the commodity occurring between intermediary actors. These subsequent movements may be conditioned on other indicia, such as adherence to financing arrangements, contract terms, insurance obligations, etc., all of which can be programmed into the host 10 and tested based on the contents of the data records for that unit of commodity.

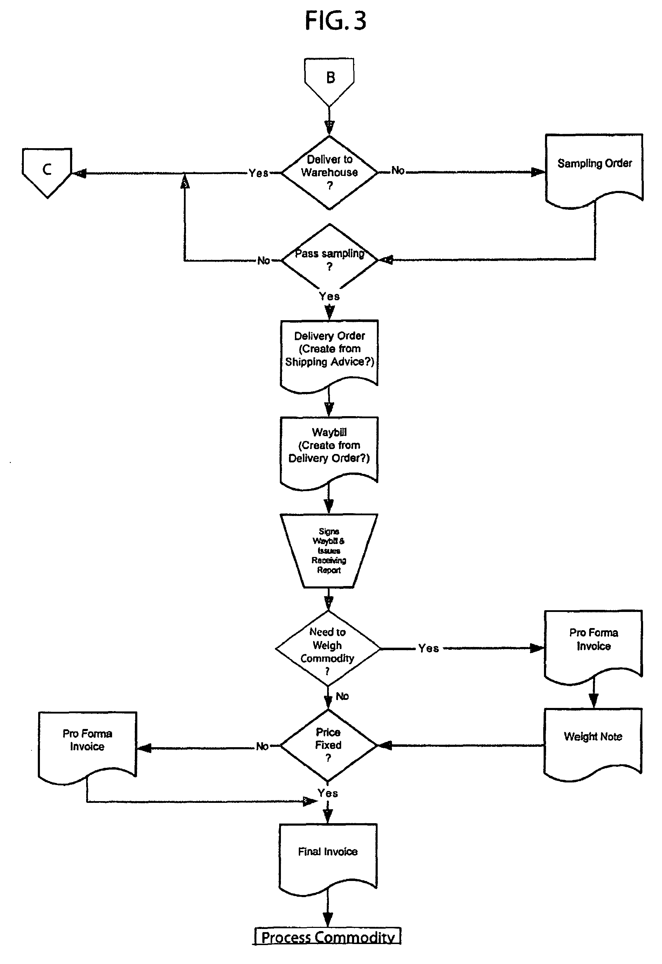

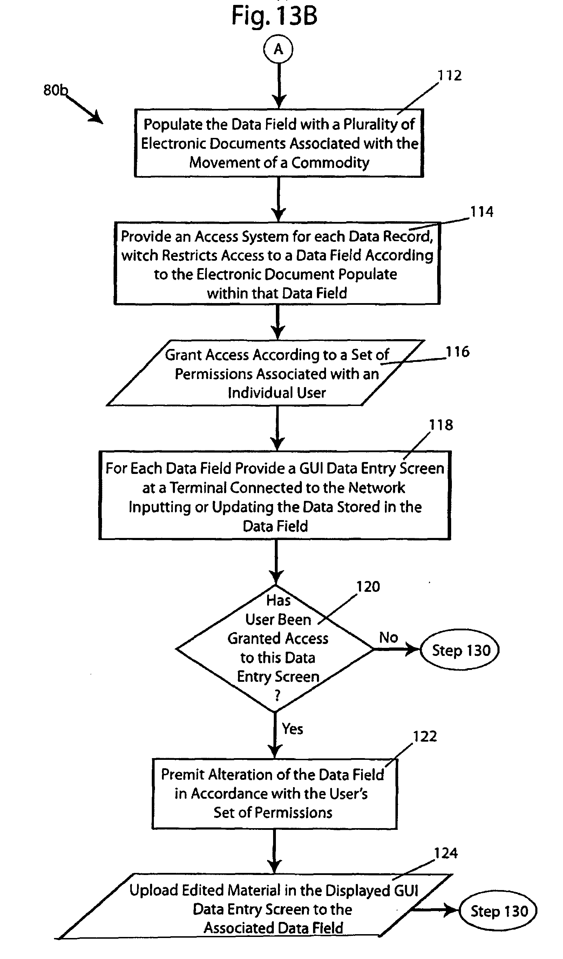

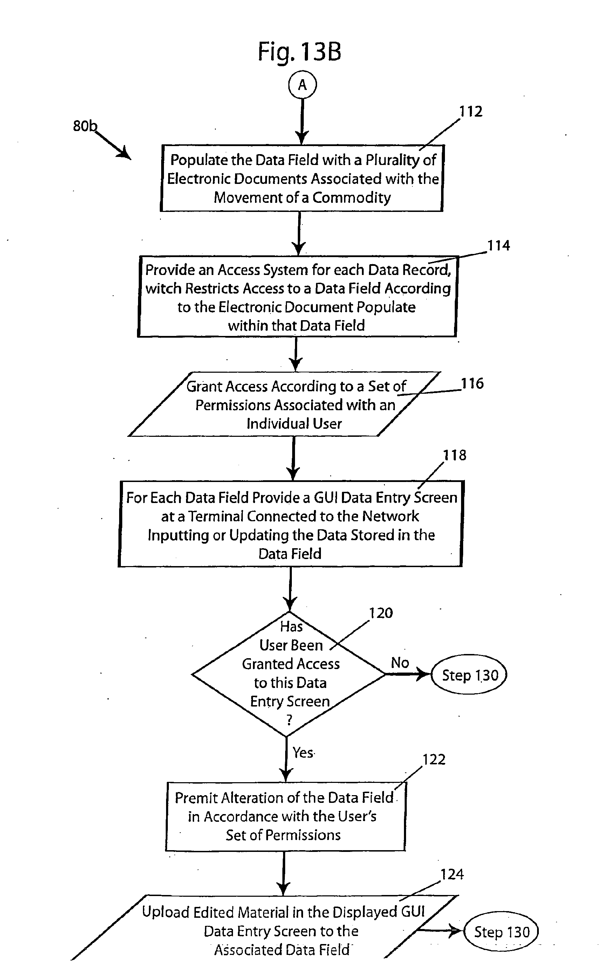

The method embodying the present invention can further include the steps illustrated in Figure 13b. After step 110 of the exemplary embodiment described above, a preferred method branches to point A of Fig. 3b. At step 112, data fields 26 are populated with a plurality of electronic documents. Each of these electronic documents are associated with a stage in the process that moves a particular lot of commodity from source to end user.

Information contained in an electronic document and populated within a data field can be pertinent information for another electronic document populate within another data field. Under the control of computer program 12, operating within the host computer station 10, the method of the present invention automatically propagates information previously entered in a data field 26 to another data field within the same data record 24. In this manner, as electronic documents are created for a yet unperformed transaction between actors, information pertinent to the new transaction already existing within the data record 24 is populated into the newly created electronic document.

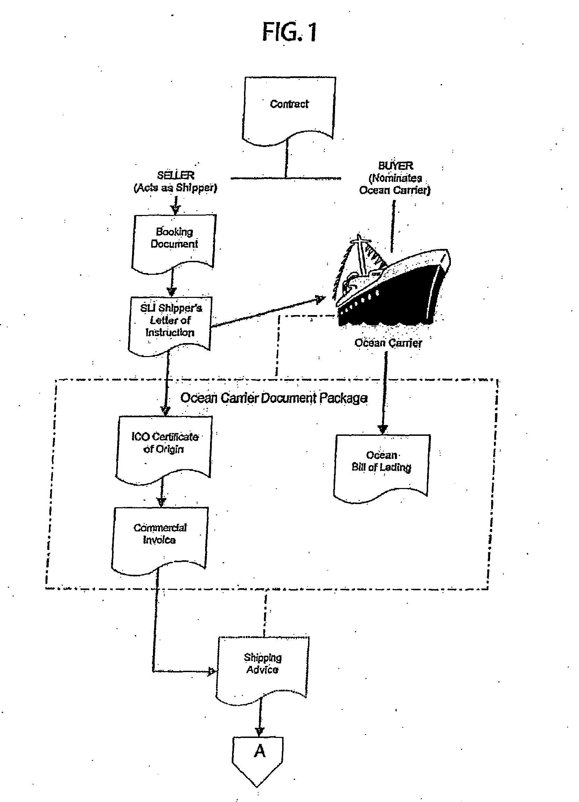

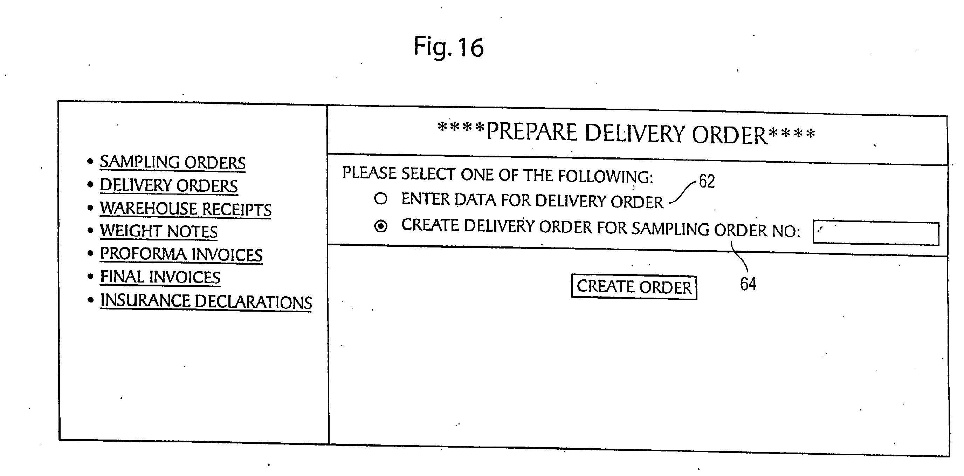

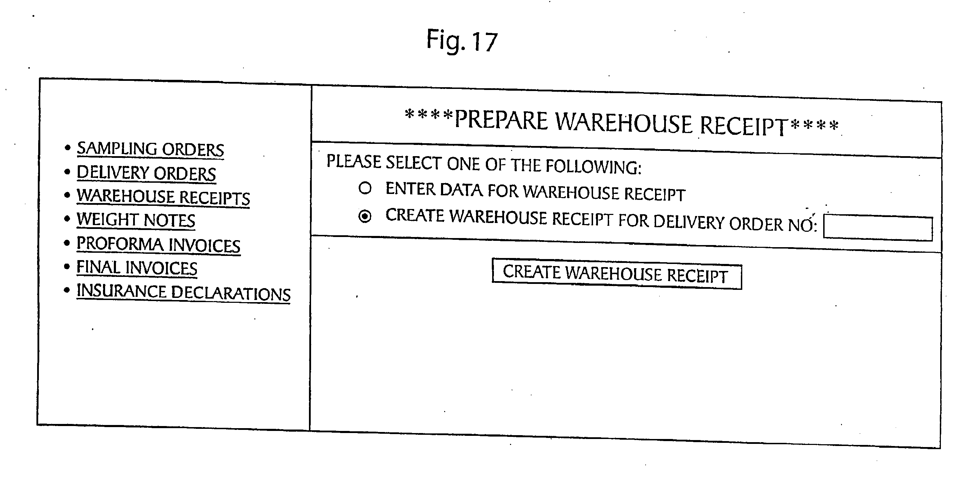

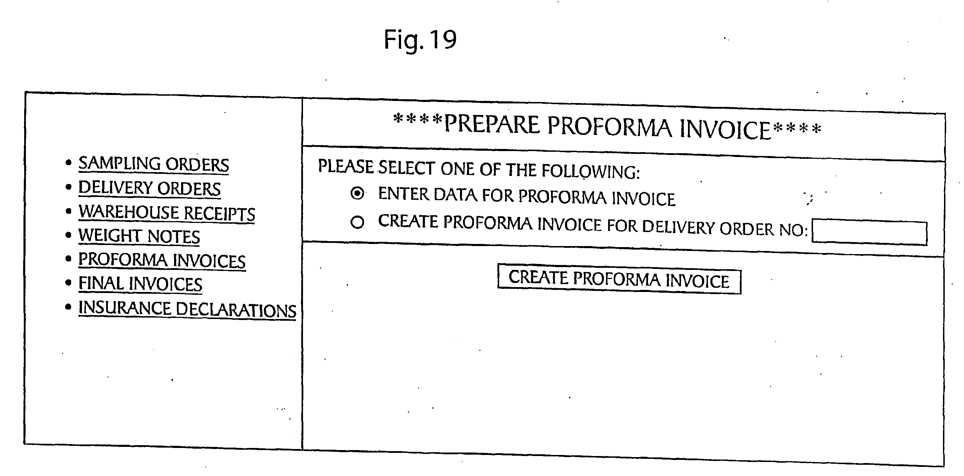

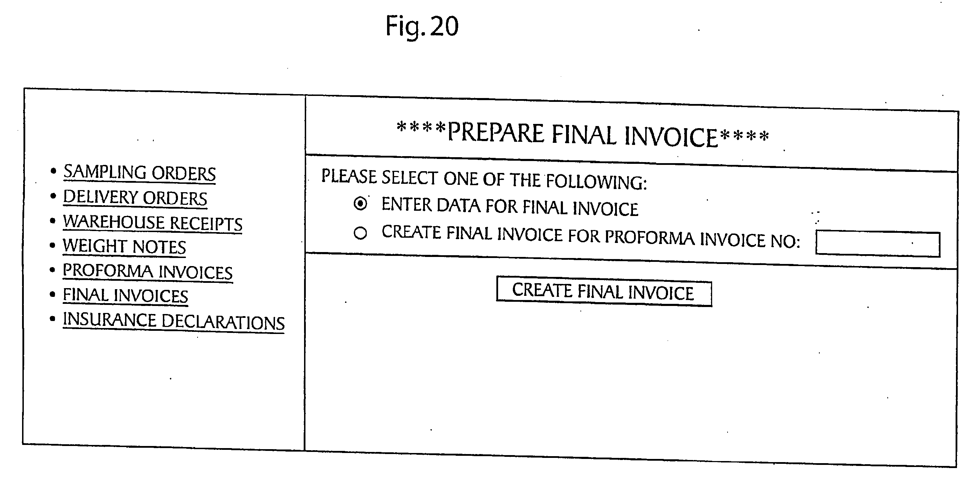

In order to assure security to the information being stored in these electronic documents the method of Figure 13b preferably provides an access system at step 114. This access system restricts an actor's access to a data field according to the particular electronic document populated within that data field and the actor's need to either access the information contained in the field, or modify that information. Therefore, at step 116, the computer program 12 grants access according to a set of permissions which are associated with an individual user's actions in the series of transactions. To assist an actor in updating information contained within a data field, a GUI data entry form 28 such as shown in Fig. 1 is made available by host station 10. Depending on the actor, the actor's set of permissions and the information which the actor inputs, prior to the GUI data entry form 28 shown in Fig. 1 being displayed, the computer program 12 will present a prepare data field GUI. Representative prepare data field GUIs are shown in Figures 16-20.

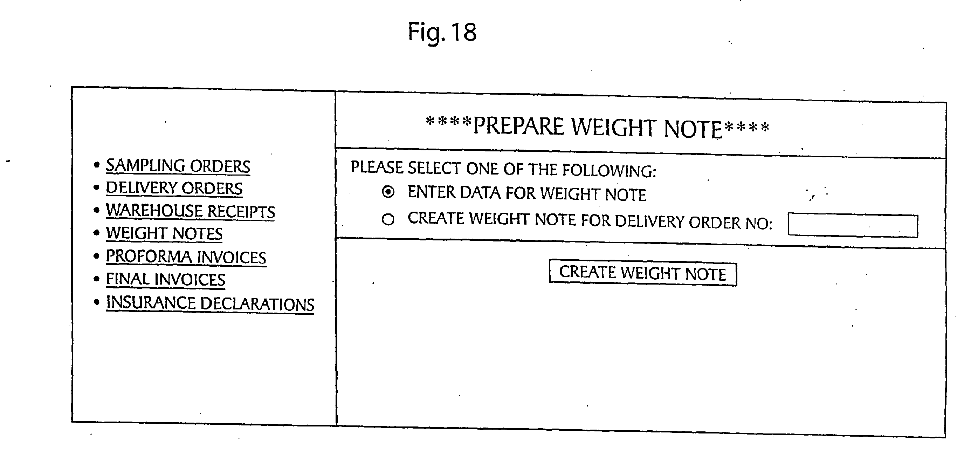

By way of example, according to Fig. 11, for a Weight Note the actors involved are the importer, broker, roaster and weigher. When the weigher inputs data regarding the weighing of a particular unit of a commodity, the program will display the Prepare Weight Note GUI shown in Figure 18. The weigher would make active the "enter data for weight note" condition in Figure 18. Subsequently, the program will display the Weight Note GUI shown in Figure 24. Naturally, if an exporter or another such actor not involved or responsible for the information contained in the Weight Note attempts to edit the same, the set of permission associated with the such actor would prevent such data entry is displayed at step 118.

Figure 16 depicts the initial GUI screen 64 a user encounters when creating or editing an electronic Deliver Order document 60 that is usable by the host system. Window 64 presents to the user with check boxes 62, 66 which offer the selections of entering data or creating a delivery order. After a user makes a selection, the method of the present invention reviews the user's set of permissions to assure access has been granted.

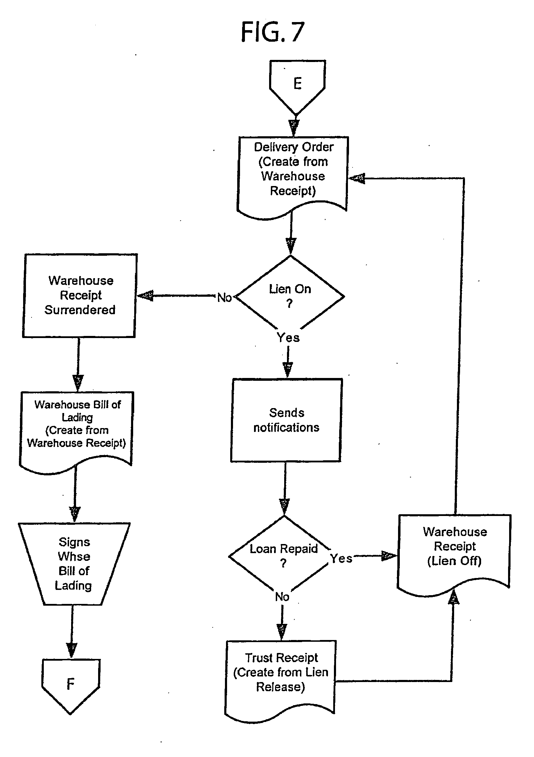

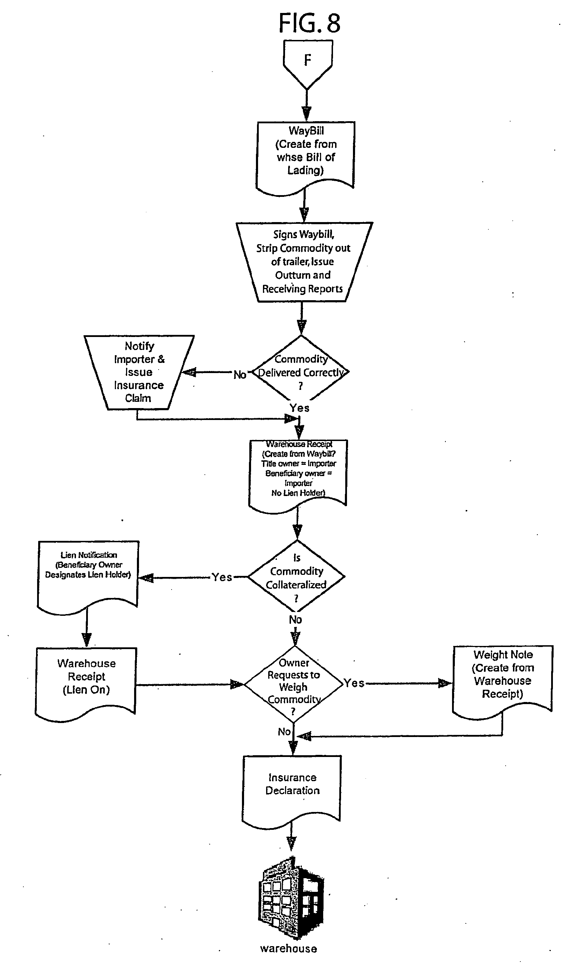

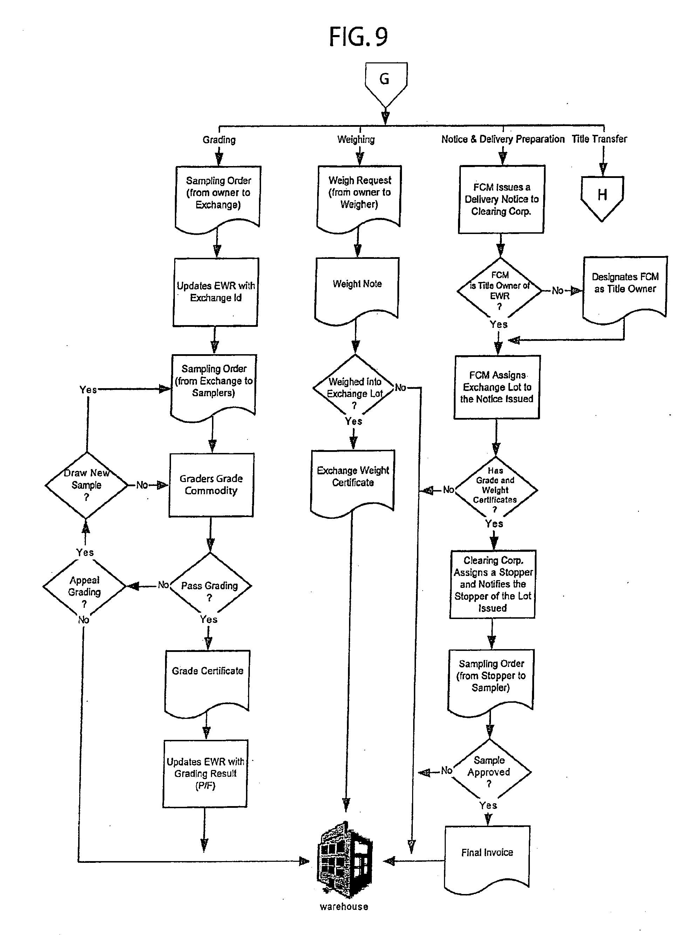

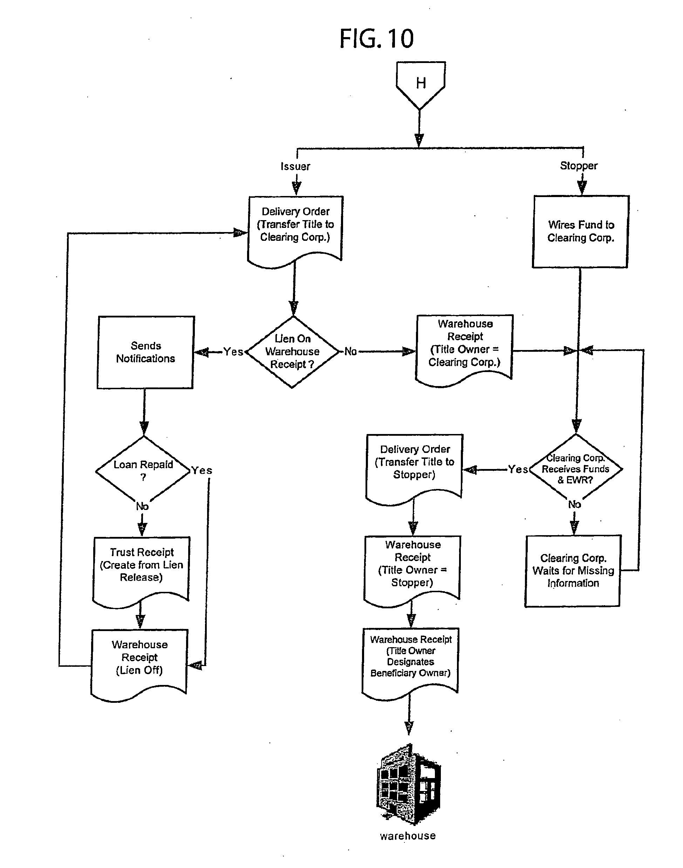

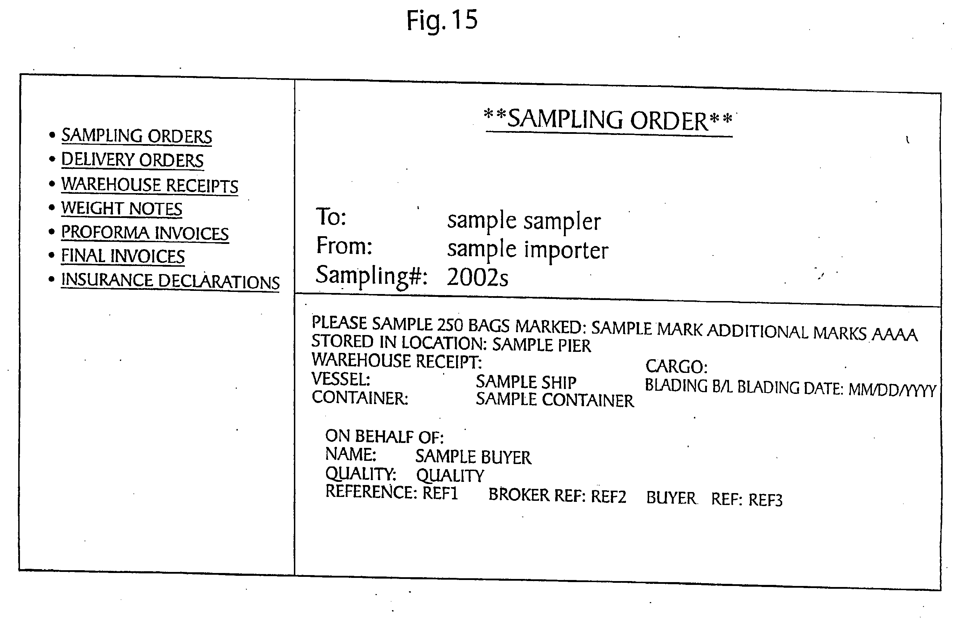

Figure 21 depicts the GUI data entry form for an electronic Delivery Order document 60 presented in another window. Data entry forms allow a user to input the data. Figures 7-10 and Figures 12-20 depict initial GUI windows and GUI data entry forms for other electronic documents.

Again referring to the method of Figure 13b, verification of the user's access to the data entry screen is performed at step 120. If the user has not been granted access to the particular data field, the method returns to step 130 of Figure 13a. If the user has been granted access, the program continues to step 122 at which step the actor is permitted to alter the data in the data field in accordance with the set of permissions granted to that user. At step 124, the computer system uploads the edited material in the GUI data entry screen and modifies the data stored within the particular data field associated with that electronic document. At step 126, the method returns to step 130. Steps 118-126 can occur throughout the duration of the series of transactions for a particular commodity. As long as the set of permissions for a user grants access, the GUI data entry screens will be made available. In other words, steps 118-126 occur before step 130, or at any other point where an electronic document is created or edited by a user.

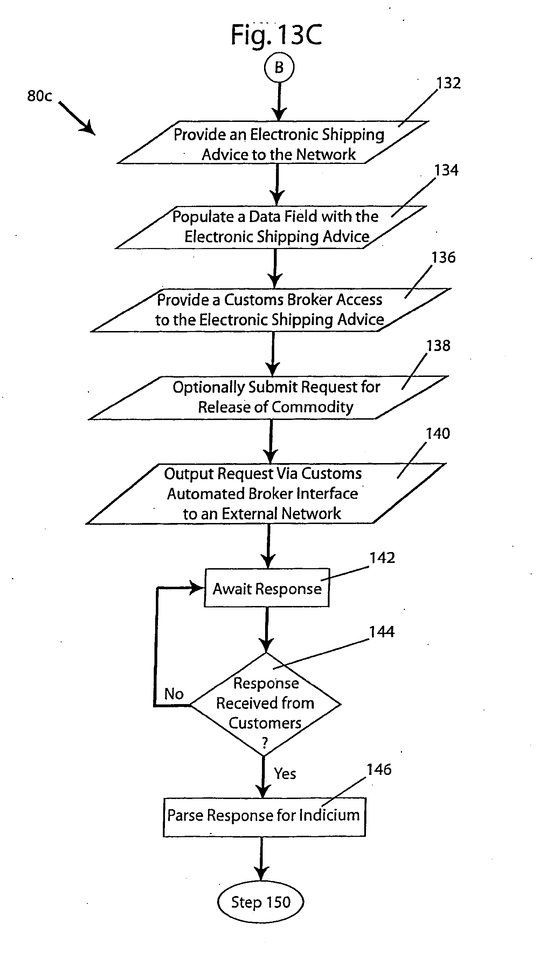

Figure 13c shows a further preferred enhancement to a method in accordance with the present invention. At branch point B of Figure 13a the method continues to step 132 where an electronic Shipping Advice document is provided to the network by an importer. The electronic Shipping Advice document contains information on the origins and transportation of the commodity from its source. This information includes the country of origin, the point of origin such as the seaport, the name of the vessel transporting the commodity the vessel's voyage number its port of loading, the estimated date of arrival and the place to where the commodity will be delivered. Also contained within this shipping advice document are the container numbers, the seal numbers and the number of bags per container.

Confirmation of the information contained within a Shipping Advice has become even more critical in the modem political environment. Externalities such as biochemical terrorism necessitate that more information regarding the pedigree of the food supply to the nation be available to better protect the general welfare of the population. At step 136, a Customs Broker accesses the electronic Shipping Advice and submits, at step 138, a request to the government agency responsible for approving the release of the particular lot of the commodity. For example, the government agency can be the aforementioned U.S. Customs Service or Food and Drug Administration Agency or foreign agency with equivalent jurisdiction

An approved Customs Broker has access to the Customs Service Automated Broker Interface and can provide the necessary information via an external network to the Customs Service at step 140. At step 142, the computer system awaits response from the Automated Broker Interface. At step 144, the computer system tests for whether a response has been received from the Customs Service. If no response is received the system loops back to step 142. Upon receiving a response the system continues to step 146 where it parses the response for an indicium of the release date. After step 146 the method of the present invention returns to step 150 of Figure 13A.

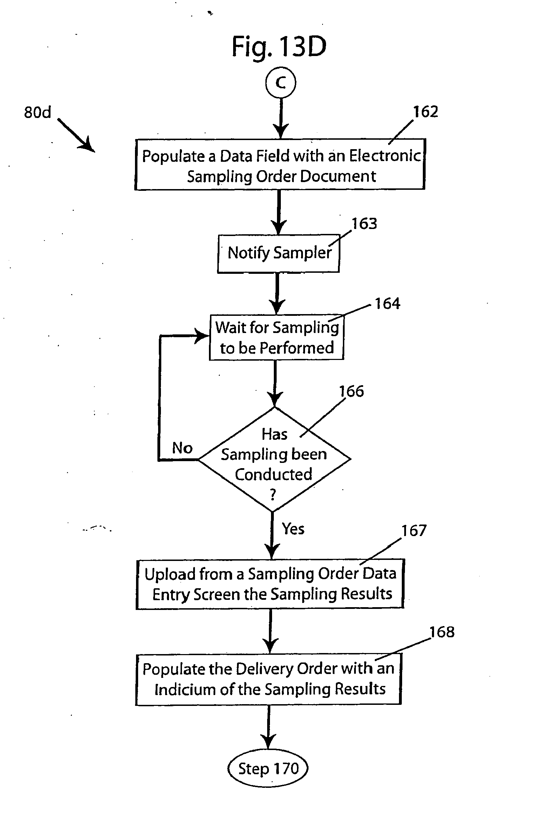

The further steps outlined in Figure 13d further enhance the method in accordance with the present invention. After step 160 of Fig. 13a, the method embodying this invention proceeds along branch point C to step 162 of Figure 13d. At step 162, a data field 26 is populated with an electronic Sampling Order document. The Sampling Order starts the sampling process which is a quality control process verifying that the goods or commodity is what was shipped and ordered. Further, the sampling order also initiates the tendering process. The data entry screen for Sampling Orders identifies the number of bags, their markings, any additional markings and where the bag is currently being stored.

The computer system 10, under control of the program 12, notifies the sampler of the sampling order at step 163. The system 10 then awaits for the sampling to be performed at step 164 and at step 166 it tests for whether the sampling has been conducted, if not it loops back and waits at step 164. If a sampling flag has been set the system continues to step 167 where the sampling results are uploaded into the data field. At step 168 the system automatically populates into the electronic delivery order document an indicium of the sampling result. The method continues to step 170 of Figure 13A.

The steps outlined in the process flow diagrams of Figures 13a through 13d are all preferably performed by the program 12 executing on the host computer 10.

Thus, while there have been shown, described, and pointed out fundamental novel features of the invention as applied to a preferred embodiment, it will be understood that various omissions, substitutions, and changes in the form and details of the devices illustrated, and in their operation, may be made by those skilled in the art without departing from the spirit and scope of the invention. For example, it is expressly intended that all combinations of those elements steps which perform substantially the same, function in substantially the same way, to achieve the same results are within the scope of the invention. Substitutions of elements from one described embodiment to another are also fully intended and contemplated. It is also to be understood that the drawings are not necessarily drawn to scale, but that they are merely conceptual in nature. The invention is defined solely with regard to the claims appended hereto, and equivalents of the recitations therein.

## Claims

1. A computer-based system for furthering commodity operations operative on computers connected in a distributed manner by a network, at least one computer having a first processor and including a database accessible to other computers on the network, the system being arranged to:
configure the database to store a set of data records which track a series of transactions for a particular unit of commodity;
build at least one data record in the database which tracks a series of transactions for the particular unit of commodity;
partition the data record into a plurality of data fields;
populate at least one data field of the database with an indication of an identity of a title holder of the particular unit of commodity;
monitor data records and network transactions to obtain information indicating that financing of the particular unit of commodity has occurred;
transform the information into an indication in a data field that the title holder has relinquished clear title;
associate the title holder identity data field with the transformed information data field; and
provide, upon receiving a request to modify the title holder indication, a message that the title holder has relinquished clear title, wherein a commodity operation involving the particular unit of commodity is prevented.

2. A computer-implemented method for furthering commodity operations operative on computers connected in a distributed manner by a network, with at least one computer on the network having a first processor and including a database accessible to other computers on the network, comprising under control of the first processor the programmatically executed steps of:
building at least one data record in the database which tracks a series of transactions for a particular unit of a commodity;
partitioning the data record into a plurality of data fields;
populating at least one data field of the database with an indication of an identity of a title holder of the particular unit of commodity;
monitoring data records and network transactions to obtain information indicating that financing of the particular unit of commodity has occurred;
transforming the information into an indication in a data field that the title holder has relinquished clear title;
associating the title holder identity data field with the transformed information data field; and
providing, upon receiving a request to modify the title holder indication, an electronic message that the title holder has relinquished clear title, wherein a commodity operation involving the particular unit of commodity is prevented.

3. The method as in claim 2, further including the step of:
populating a data field with an indication that a financial institution has issued a Notice of Assignment for the particular unit of commodity.

4. The method as in claim 2 or 3, further including the steps of:
populating a data field with an indication that a financial institution has issued a Trust Receipt for the particular unit of commodity;
transforming the indication of a Trust Receipt into an acknowledgement that the title holder has fee title to the particular unit of commodity, wherein the acknowledgement is indicated in a data field; and
associating the acknowledgment data field with the indication of the title holder data field.

5. The method as in claim 2, 3 or 4, further including the step of:
populating a data field with an indication that a Bank Release has issued for the particular unit of the commodity, wherein a subsequent commodity operation involving the particular unit of commodity is permitted.

6. The method as in any of claim 2 to 5, further including the steps of:
populating other data fields with a plurality of electronic documents associated with the proposed movement of the particular unit of commodity;
providing an access system to each data record which limits access according to the data stored in each data field;
granting access to multiple users according to a set of permissions associated with each individual user; and
permitting alteration of data in the data fields of the data record in accordance with the set of permissions granted to the individual user.
providing an access system to each data record which limits access according to the data stored in each data field;
granting access to multiple users according to a set of permissions associated with each individual user; and
permitting alteration of data in the data fields of the data record in accordance with the set of permissions granted to the individual user.

7. The method as in any of claims 2 to 6, further including the steps of:
associating a data entry form with each populated data field, wherein the data entry form includes a GUI input template for one or more associated data fields;
displaying at a terminal connected to the network having GUI capabilities the data entry form;
verifying the set of permissions associated with the individual user; and
uploading any edited material in the displayed data entry form to the associated data fields if the set of permissions associated with the user grants the user permission to edit such material in the display data entry form.

8. The method as in any of claims 2 to 7, wherein the programmatically executed steps provide a subscription service to members of a trade; and wherein said at least one computer is operated by a party which is neutral among the members.

9. The method as in claim 6, wherein the electronic documents are selected from the group consisting essentially of: warehouse receipt; delivery order; sampling order; weight notes; ocean bill of lading; waybill; customs entry; insurance declaration; shippers invoice; simple invoice; contract; price fix letter; destination declaration; FDA release; and shipping advice.

10. The method as in any of claims 2 to 9, further including the steps of:
receiving through the network an electronic Shipping Advice concerning a particular unit of a commodity;
populating one or more data fields with the electronic Shipping Advice;
electronically forwarding the information populated in said at least one or more data fields to a second government agency; and
receiving an indicium from the second government agency, wherein the indicium is advise of governmental compliance of the particular unit of the commodity.

11. The method as in claim 6, further comprising the steps of:
receiving through the network information pertaining to a Sampling Order for the particular unit of the commodity;
populating the electronic delivery order document with the information from the Sampling Order; and
preventing occurrence of the executing step prior to receiving the information.

12. A method as in any of claims 2 to 11, further comprising the steps of:
receiving through the network a second indicium contained in a second electronic release document, wherein the indicium conditions subsequent movement of the particular unit of the commodity upon completion of at least one criteria; and
prohibiting issuance of a subsequent delivery order document until after the second electronic release document is updated with information indicating compliance with said at least one criteria.

13. A method as in claim 12, wherein the criteria is selected from the group consisting essentially of:
adherence to financing arrangements; adherence to contract terms; and adherence to insurance obligations.
